Europäisches Patentamt

European Patent Office

Office européen des brevets

(11) Publication number: **0 278 244 B1**

## EUROPEAN PATENT SPECIFICATION

(45) Date of publication of patent specification: **11.09.91**

(51) Int. Cl.⁵: **B65G 15/38, B65G 15/54**

(21) Application number: **88100389.1**

(22) Date of filing: **26.01.88**

(54) Conveyor belt.

(30) Priority: **13.02.87 ES 8700367**

(43) Date of publication of application:
**17.08.88 Bulletin 88/33**

(45) Publication of the grant of the patent:
**11.09.91 Bulletin 91/37**

(84) Designated Contracting States:
**AT BE CH DE ES FR GB GR IT LI LU NL SE**

(56) References cited:
**DE-A- 2 026 599**
**FR-A- 1 408 880**
**GB-A- 2 161 253**
**US-A- 2 199 529**

(73) Proprietor: **Pietsch, Tibor, Dipl.-Ing.**
**Santo Domingo de Silos, 8**
**E-28036 Madrid(ES)**

(72) Inventor: **Pietsch, Tibor, Dipl.-Ing.**
**Santo Domingo de Silos, 8**
**E-28036 Madrid(ES)**

(74) Representative: **Patentanwälte Deufel, Hertel, Lewald**
**Postfach 26 02 47 Isartorplatz 6**
**W-8000 München 26(DE)**

Rank Xerox (UK) Business Services

## Description

The invention relates to a conveyor belt of metallic wires whos holes between the metallic wires contain a substance.

The invention as well is directed to a method of preparing a conveyor belt of this kind.

Several kinds of conveyor belts are known on the market as for instance rubber belts, plastic belts or vegetable fabric belts, thin metal sheet belts, articulated metal plates belts or belts made of metallic wires preferably articulated. The known belts have multiple disadvantages that have not been solved yet. Thus, rubber, plastic or vegetable fabric belts have the disadvantage that they age relatively quickly and they cannot be subjected to high temperatures. Thin sheet metal belts need on both ends very large rolls (of about 1 meter diameter) and even if they are made by a refractory substance, when they are heated to temperatures higher than 500°C, they suffer considerable deformations that impair their function. Articulated metal plates belts have the disadvantage that they result in great thickness and so, weight (about 150 kg per square meter); thus, on the one hand, they are very expensive to be manufactured and on the other hand, when they are used for instance to carry materials through a furnace, they consume a great amount of energy during heating and so, they are uneconomic. Finally, belts made by metallic wires, if they are refractory, resist high temperatures and, moreover, are light and cheap to manufacture and to heat; but, however, they cannot be used to transport powdered or granulated products that would pass through the holes between the wires.

Such a conveyor belt of metallic wires whose holes between the wires contain a substance has become known by US-PS 2 199 529, a mesh between the metallic fabric being filled with a composition comprising mineral wool and a binder, asbestos and a binder or either of the above fibrous mineral substances and pulverized soap stone and a binder. These are compositions standing only relatively low temperatures. A plastic composition is introduced into an oven and is hardened. The wires of that US-PS are not refractory. The belt of that US-PS being destined for the handling of glassware will only be heated up to around 600°C.

The problem on the base of the invention is to provide belts made by metallic wires that are refractory, resist to very high temperatures and can be used to transport powdered or granulated products that would pass through the holes between the wires of belts sold on the market. Such belts should particularly be prone in the continuous cellular glass manufacture.

According to the invention such a conveyor belt of metallic wires whose holes between the wires contain a substance is characterised in that the metallic wires are refractory and the substance in the holes between the wires is a fired refractory solid material. The disadvantages above mentioned are removed.

Advantageously the substance in the holes between the wires is a fired refractory solid ceramic.

According to a favourable aspect of the invention a method for preparing a conveyor belt of the above mentioned kind can be conducted such that a clay of plastic or liquid consistence is introduced into the holes between the refractory metallic wires and the clay posteriorly is cured by drying and firing at high temperatures.

The above deficiencies are removed. The heat conductivity of the substance used is by far higher than the heat conductivity of the material of the above US-Patent, also in view of the higher density of the substance according to the invention.

## BRIEF DESCRIPTION OF THE DRAWINGS

Figure 1 is an increased plan view of the metallic wires that form the belt; the holes being without solid substances.

Figure 2 shows the conveyor belt already provided with solid substances according to a cross-section following the line A-A of figure 1.

## DETAILED DESCRIPTION OF THE INVENTION

First of all, it should be made clear that in all the following description, "wire" should be understood as a metallic and elongated body, the cross-section of which could be circular, square, rectangular or any other with the most appropriate sizes.

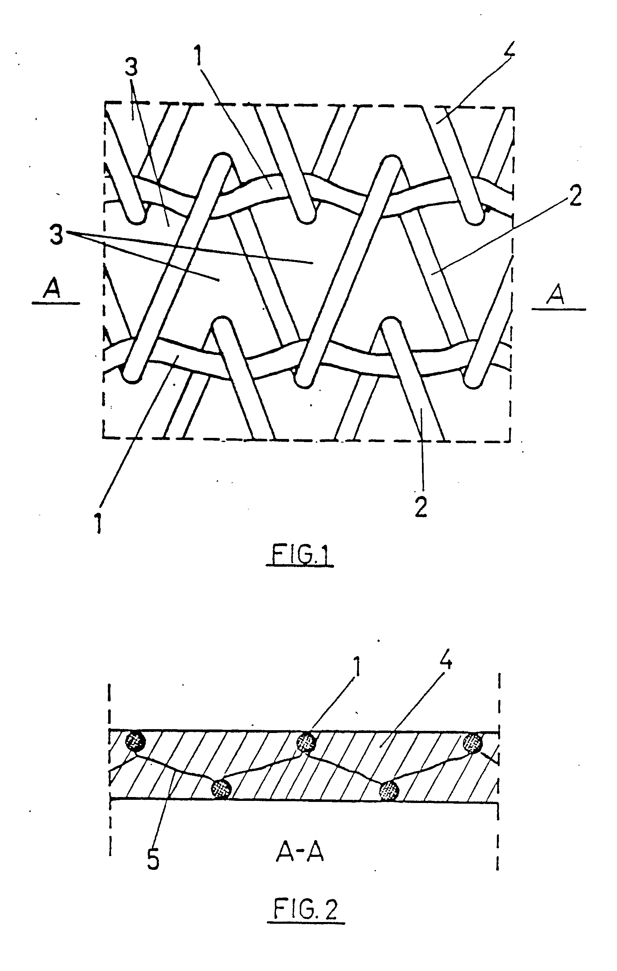

Fig. 1 shows a plan view of the metallic wires that will be considered as a base to perform the conveyor belt according to the invention. Between the metallic wires open spaces or holes 3 are provided that will contain the solid substance.

Fig. 2 represents a cross-section corresponding to the line A-A of fig. 1, of a conveyor belt according to the invention. Holes 3 are containing the solid substance 4. Between the metallic wires 1 fissures 5 are formed in the solid substance.

The manufacturing of the conveyor belt of the invention will be carried out according to the following example of achievement.

## Example

For example with a palette knife, clay or other similar refractory substance of plastic or liquid consistence is introduced in the holes of the conveyor belt. It rests to dry and then the conveyor belt with clay is subjected to high temperature, and the contents of the holes will be transformed into ceramic.

The belt so prepared has the following advantages:

With the holes 3 containing solid substances 4, no material can go through the conveyor belt. The solid substance 4 covers almost entirely the metallic wire 1 and 2 protecting them against oxidation and avoiding the deformation of the conveyor belt. Moreover, this conveyor belt is very light and so, economic. Because of its light weight, its heating is also economic when materials are to be transported through a furnace.

In the substance 4 that fills the holes 3 fissures 5 are formed coming from the metallic wires, forming then solid particles in the holes between the wires. The size of these fissures do not exceed a hundredth millimeter and so, the finest dust cannot go through the conveyor belt. However, these fissures have the great advantage that the flexibility of the belt will not be impaired, this results in an important characteristic that allows to use small rolls at the ends of the belt.

This novel conveyor belt is particularly suitable to carry powdered or granulated products through a furnace, as it is necessary in continuous cellular glass manufacturing. To prepare the belt for this purpose, the belt is assembled with the holes 3 empty and lead through the cold furnace, returning under the furnace and being bent at the two ends. Then, the belt is put on work and its holes are filled up with clay. The belt is subjected to a slow and full rotation and the holes are all filled up. Afterwards, the furnace is heated up to a temperature of 900° C for example, and the belt is passed through the furnace and the clay is transformed into ceramic. Once the belt has been prepared in this way, talcum and then powdered and/or granulated vitreous mass is distributed upon the belt in a continous way. The vitreous mass is prepared in order to expand at high temperature. The talcum is used as a separating material so that the melted glass does not adhere to the conveyor belt. The belt in continous motion transports the vitreous mass through the furnace where the mass melts, expands and is transformed into cellular glass and cooled gradually.

The conveyor belt according to the invention can be made of chrome-nickel wires of a diameter in the range between 0.9 and 1.2 mm and of ceramic obtained by firing the clay that is generally used in sculpture. The total thickness of the belt is of about 3 mm and its total weight per square meter about 10 kilogramm.

Due to the fact that the conveyor belt according to the invention is made of ceramic and metallic wires, it can be denominated "a reinforced ceramic belt."

## Claims

1. Conveyor belt of metallic wires whose holes between the wires contain a substance, characterised in that the metallic wires are refractory and the substance in the holes between the wires is a fired refractory solid material.

2. Conveyer belt according to claim 1, characterised in that the substance in the holes between the wires is fired refractory solid ceramic.

3. Method of preparing a conveyor belt according to claims 1 or 2, characterised in that a clay of plastic or liquid consistence is introduced into the holes between the refractory metallic wires and the clay posteriorly is cured by drying and firing at high temperatures.

## Revendications

1. Bande transporteuse de fils métalliques dont les trous entre les fils contiennent une substance, caractérisée en ce que les fils métalliques sont réfractaires et que la substance dans les trous entre les fils est un matériau solide réfractaire cuit.

2. Bande transporteuse suivant la revendication 1, caractérisée en ce que la substance dans les trous entre les fils est une céramique solide réfractaire cuite.

3. Procédé pour préparer une bande transporteuse suivant les revendications 1 ou 2, caractérisé en ce qu'une argile de consistance plastique ou liquide est introduite dans les trous entre les fils métalliques réfractaires et que l'argile est durcie par la suite par séchage et cuisson à des températures élevées.

## Patentansprüche

1. Förderband aus metallischen Drähten, dessen Löcher zwischen den Drähten eine Substanz enthalten, dadurch gekennzeichnet, daß die metallischen Drähte feuerfest sind und daß die Substanz in den Löchern zwischen den Drähten ein gebranntes feuerbeständiges Feststoffmaterial ist.

2. Förderband nach Anspruch 1, dadurch gekennzeichnet, daß die Substanz in den Löchern zwischen den Drähten gebrannte feuerbeständige Feststoffkeramik ist.

3. Verfahren zum Herstellen eines Förderbands nach den Ansprüchen 1 oder 2, dadurch gekennzeichnet, daß ein Ton plastischer oder flüssiger Konsistenz in die Löcher zwischen den feuerbeständigen Metalldrähten eingeführt wird und der Ton später durch Trocknen und Brennen bei hohen Temperaturen ausgehärtet wird.

FIG.1

A-A

FIG. 2